# FASCICULE DE BREVET EUROPEEN

(11) **EP 0 672 573 B1**
(45) Date de publication et mention de la délivrance du brevet: **01.07.1998**
(21) Numéro de dépôt: 95400538.5
(22) Date de dépôt: 13.03.1995
(51) Int. Cl.: B62D 1/18, F16B 21/10

(54) **Ensemble de colonne de direction réglable en position notamment pour véhicule automobile**
Verstellbare Lenksäule, insbesondere für ein Kraftfahrzeug
Adjustable steering column, especially for motor vehicles

(30) Priorité: 15.03.1994 FR 9403007
(43) Date de publication de la demande: 20.09.1995
(73) Titulaire: ECIA - EQUIPEMENTS ET COMPOSANTS POUR L'INDUSTRIE AUTOMOBILE, F-25400 Audincourt (FR)
(72) Inventeur: Courvoisier, Patrick, F-25600 Vieux-Chamont (FR); Bertrand, Jean-Marie, F-25700 Valentigney (FR)
(74) Mandataire: Habasque, Etienne Joel Jean-François

(56) Documents cités:
- EP-A- 0 455 558
- EP-A- 0 559 523
- PATENT ABSTRACTS OF JAPAN vol. 6, no. 50 (M-120) (928) 3 Avril 1982 & JP-A-56 163 962 (TOYO KOGYO) 16 Décembre 1981

## Description

La présente invention concerne un ensemble de colonne de direction réglable en position notamment pour véhicule automobile.

Plus particulièrement, l'invention se rapporte à un ensemble de colonne de direction du type comprenant un arbre de direction monté rotatif dans un corps de colonne, associé à l'une de ses extrémités, à un palier de montage comportant sur des faces latérales opposées des moyens d'articulation adaptés pour coopérer avec des moyens complémentaires d'ailes d'une structure de support présentant une section de forme générale en U, pour la fixation du corps sur le reste du véhicule, et à l'autre de ses extrémités, à des moyens de blocage du corps en position par rapport à la structure de support, déplaçables par un utilisateur entre une position de verrouillage et une position de déverrouillage permettant le réglage de la position du volant. (voir par exemple le document EP-A-0 559 523 au nom de la Demanderesse).

Les documents EP-A-0 455 558 et JP-A-561 639 62 décrivent également des systèmes dans lesquels il est prévu des moyens de blocage axial de l'arbre de direction lors du montage d'un ensemble de colonne dans un véhicule, ces moyens étant insérés dans des trous réalisés dans le corps de colonne.

En régle générale, le corps et/ou l'arbre sont montés déplaçables axialement et/ou angulairement par rapport à la structure de support pour permettre un réglage de la position axiale et en hauteur du volant de direction, afin de l'adapter à la morphologie du conducteur.

Cependant, ces ensembles de colonne de direction présentent des inconvénients de montage.

En effet, il peut arriver que lors du montage de l'ensemble sur le véhicule, l'opérateur de montage déverrouille accidentellement les moyens de blocage du corps en position par rapport à la structure de support, ce qui peut entraîner des défauts de fixation de l'extrémité correspondante de l'arbre de direction sur le reste du mécanisme de direction du véhicule.

Le but de l'invention est donc de résoudre ces problèmes en proposant un ensemble de colonne qui soit simple et fiable.

A cet effet, l'invention a pour objet un ensemble de colonne de direction réglable en position notamment pour véhicule automobile, du type comprenant un arbre de direction monté rotatif dans un corps de colonne associé à l'une de ses extrémités à un palier de montage, comportant sur des faces latérales opposées des moyens d'articulation adaptés pour coopérer avec des moyens complémentaires d'ailes d'une structure de support, pour la fixation du corps sur le reste du véhicule, et à l'autre de ses extrémités, à des moyens de blocage du corps en position par rapport à la structure de support, déplaçables par un utilisateur entre une position de verrouillage et une position de déverrouillage permettant le réglage de la position du volant, caractérisé en ce qu'il comporte des moyens d'immobilisation axiale temporaire de l'arbre par rapport au palier, déplaçables entre une position active d'immobilisation et une position escamotée et des moyens de limitation du déplacement axial de l'arbre par rapport au palier lorsque les moyens d'immobilisation axiale temporaire sont en position escamotée.

L'invention sera mieux comprise à la lecture de la description qui va suivre, donnée uniquement à titre d'exemple et faite en se référant aux dessins annexés, sur lesquels :
- la Fig.1 représente une vue de côté partiellement en coupe d'une partie d'un ensemble de colonne de direction selon l'invention;
- les Fig.2 et 3 représentent des vues en coupe illustrant l'implantation de moyens d'immobilisation axiale temporaire dans un ensemble de colonne de direction selon l'invention, respectivement en position active et en position escamotée;
- la Fig.4 représente une vue en coupe d'une variante de réalisation de moyens d'immobilisation axiale temporaire et de moyens de limitation du déplacement axial d'un arbre par rapport à un palier de montage, entrant dans la constitution d'un ensemble de colonne de direction selon l'invention;
- la Fig.5 représente une vue de côté d'un organe de limitation du déplacement axial d'un arbre, entrant dans la constitution d'un ensemble de colonne de direction selon l'invention; et
- la Fig.6 représente une vue en coupe partielle d'une partie d'un ensemble de colonne de direction selon l'invention, comportant encore une autre variante de réalisation de moyens d'immobilisation et de limitation du déplacement axial d'un arbre.

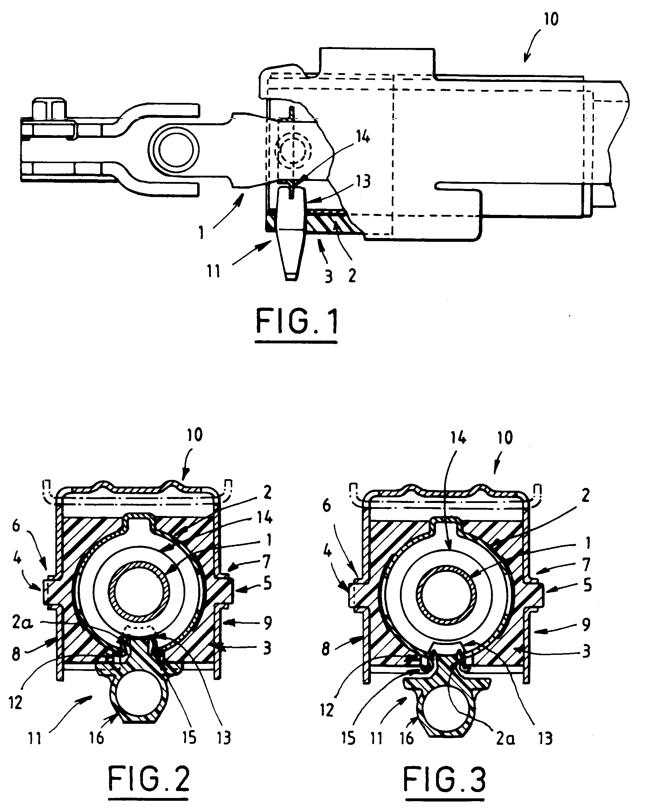

Ainsi qu'on peut le voir sur les figures 1,2 et 3, un ensemble de colonne de direction réglable en position notamment pour véhicule automobile, selon l'invention, comprend un arbre de direction désigné par la référence générale 1, monté rotatif dans un corps de colonne désigné par la référence générale 2, et associé à l'une de ses extrémités à un palier de montage 3 comportant sur des faces latérales opposées, des moyens d'articulation 4 et 5 adaptés pour coopérer avec des moyens complémentaires 6 et 7 d'ailes, respectivement 8 et 9, d'une structure de support désignée par la référence générale 10 sur ces figures.

Cette structure de support présente une section de forme générale en U inversé permettant la fixation du corps de colonne sur le reste du véhicule, de manière classique.

A l'autre de ses extrémités, non représentée sur ces dessins, le corps de colonne 2 est associé à des moyens de blocage de celui-ci en position par rapport à la structure de support 10.

On notera que ces moyens de blocage présentent n'importe quelle structure appropriée et sont déplaçables par un utilisateur entre une position de verrouillage et une position de déverrouillage permettant le réglage de la position du volant.

On conçoit en effet par exemple qu'en position de déverrouillage de ces moyens de blocage, l'utilisateur peut déplacer le volant et donc l'arbre de direction et le corps axialement et/ou angulairement par rapport à la structure de support 10, la palier de montage 3 pivotant par exemple autour de l'axe d'articulation défini par les moyens d'articulation 4 et 5 des faces latérales opposées de celui-ci et les moyens complémentaires 6 et 7 des ailes de la structure de support.

Par ailleurs, le corps 2 peut également être monté déplaçable axialement dans ce palier de montage.

Pour de plus amples renseignements concernant la structure et le fonctionnement de ce type d'ensembles, on pourra se reporter au document EP mentionné précédemment.

Selon l'invention, cet ensemble de colonne de direction comporte des moyens d'immobilisation axiale temporaire de l'arbre 1 par rapport au palier 3, déplaçables entre une position active d'immobilisation et une position escamotée, comme cela est illustré sur les figures 2 et 3 respectivement.

Ces moyens d'immobilisation désignés par la référence générale 11, comprennent par exemple un organe d'immobilisation disposé dans un évidement 12 ménagé dans la partie inférieure du palier 3, cet organe comportant à l'une de ses extrémités des surfaces de butée désignées par la référence générale 13 et adaptées pour coopérer avec des moyens de butée complémentaires 14 de l'arbre 1, pour immobiliser celui-ci en position axiale dans le palier lorsque cet organe d'immobilisation est en position active comme représenté sur la figure 2.

Les surfaces de butée de cet organe peuvent par exemple être constituées par des parties en saillie radiales de celui-ci, adaptées pour s'étendre de part et d'autre d'une collerette 14 formant les moyens de butée complémentaires de l'arbre 1 pour assurer l'immobilisation de celui-ci dans le palier.

On notera à cet égard que cette extrémité correspondante de l'organe 11 fait saillie dans le corps 2 à travers une lumière 2a ménagée dans celui-ci en regard de l'évidement 12 du palier.

On notera également que cet organe peut comporter des moyens élastiques, tels que des languettes latérales, par exemple 15, adaptées pour coopérer avec les bords de la lumière 2a du corps ou les bords de l'évidement 12 du palier pour délimiter les positions active et escamotée de cet organe.

A son autre extrémité, cet organe 11 comporte des moyens de préhension 16 faisant saillie au-delà du palier de montage, pour son déplacement par un utilisateur.

On conçoit alors que lors du montage de cet ensemble de colonne sur véhicule, les moyens 11 d'immobilisation axiale temporaire de l'arbre sont en position active, c'est à dire que les surfaces de butée 13 de celui-ci s'étendent de part et d'autre des moyens de butée complémentaires 14 de l'arbre 1 pour l'immobiliser par rapport au palier 3.

Ceci permet de garantir la position axiale de l'arbre dans l'ensemble de colonne pour assurer une fixation correcte de celui-ci sur le reste du mécanisme de direction du véhicule.

Une fois ce montage et cette fixation réalisés, l'opérateur déplace l'organe d'immobilisation 11 de sa position active, représentée sur la figure 2, vers sa position escamotée, représentée sur la figure 3, ce qui permet à l'arbre et au corps de se déplacer par rapport au palier.

Cependant, il a été constaté que l'organe d'immobilisation axiale temporaire 11 pouvait être déplacé vers sa position escamotée de manière accidentelle par un opérateur, lors du montage, ce qui ne permet pas de garantir une fixation suffisamment fiable de l'extrémité de l'arbre de direction sur le reste du mécanisme de direction du véhicule.

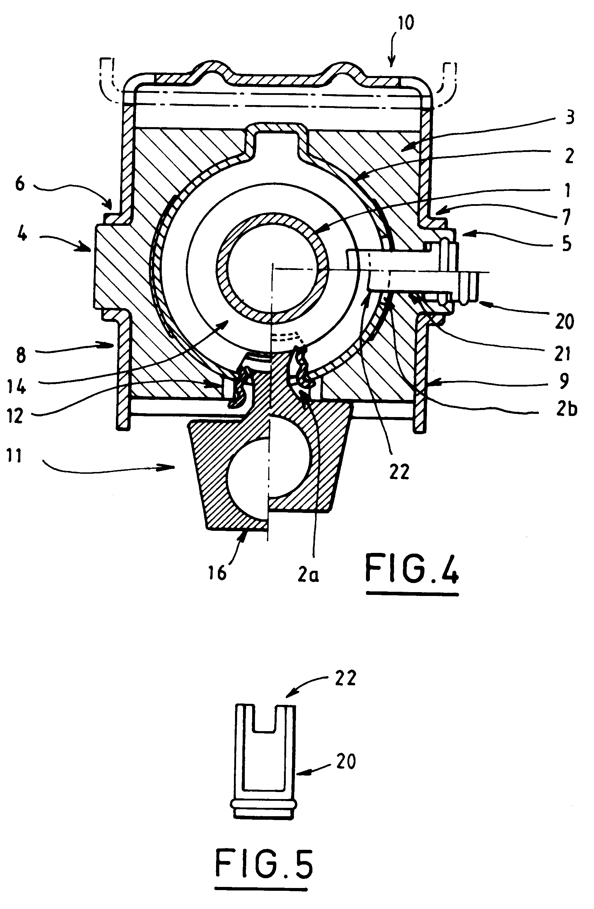

Pour résoudre ces problèmes et comme cela est représenté sur les figures 4 et 5, l'ensemble de colonne de direction comporte également des moyens de limitation du déplacement axial de l'arbre par rapport au palier, lorsque ces moyens 11 d'immobilisation axiale temporaire sont en position escamotée.

On notera qu'un certain déplacement axial de l'arbre dans l'ensemble doit être autorisé en raison du mode de fixation de l'ensemble sur véhicule et des réglages possibles de celui-ci en position.

Sur la figure 4, des numéros de référence identiques ont été utilisés pour désigner des éléments analogues à ceux déjà représentés sur les figures 1,2 et 3.

On reconnaît en effet sur cette figure 4, la structure de support 10, les ailes 8 et 9 de celle-ci, l'arbre de direction 1, le corps 2, le palier 3, les moyens d'articulation 4 et 5 des faces latérales opposées de celui-ci adaptés pour coopérer avec des moyens complémentaires 6 et 7 des ailes de la structure de support, les moyens d'immobilisation axiale temporaire 11 comprenant un premier organe d'immobilisation et la collerette 14 de l'arbre.

Dans cet exemple de réalisation, le premier organe 11 d'immobilisation axiale temporaire de l'arbre 1 dans le palier 3 est toujours monté déplaçable entre une position active d'immobilisation de l'arbre par coopération avec les moyens de butée complémentaires de celui-ci et une position escamotée comme cela est illustré.

Cependant, l'ensemble de colonne de direction représenté comporte également des moyens 20 de limitation de déplacement axial de l'arbre 1 par rapport au palier 3 lorsque les moyens 11 d'immobilisation axiale temporaire sont en position escamotée.

Ces moyens 20 de limitation du déplacement axial peuvent être constitués par un second organe disposé dans un second évidement 21 du palier et comportant à l'une de ses extrémités des secondes surfaces de butée délimitant une plage de déplacement axial autorisé des moyens de butée complémentaires de l'arbre, c'est à dire de la collerette 14 et donc de cet arbre par rapport au palier.

Ces secondes surfaces de butée sont désignées de façon générale par la référence 22 sur les figures 4 et 5 et permettent de limiter le déplacement axial autorisé de l'arbre pour obtenir une fixation suffisamment fiable de celui-ci sur le reste du mécanisme de direction du véhicule, même lorsque les moyens 11 d'immobilisation ont été déplacés accidentellement vers leur position escamotée au cours du montage.

Dans l'exemple de réalisation décrit en regard de la figure 4, les moyens d'articulation 4 et 5 des faces latérales du palier 3 sur les ailes correspondantes de la structure de support, sont formés par des parties en saillie de celles-ci adaptées pour s'engager dans des canons de pivotement 6 et 7 venus de matière avec les ailes de la structure de support et l'on conçoit que le second évidement 21 de réception de l'organe 20 de limitation du déplacement axial de l'arbre par rapport au palier, peut être ménagé dans l'une de ces parties en saillie, cet organe de limitation 20 traversant une lumière correspondante 2b ménagée dans le corps de colonne 2, en regard du second évidement 21.

Il va de soi bien entendu qu'une disposition inverse de ces premier et second organes peut également être envisagée.

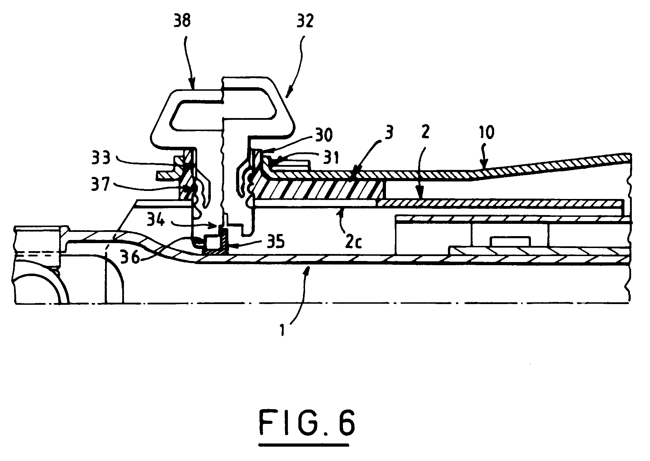

Dans l'exemple de réalisation représenté sur la figure 6, on reconnaît l'arbre de direction 1, le corps de colonne 2, la structure de support 10 et le palier de montage 3 comportant sur ses faces latérales opposées des moyens d'articulation, par exemple 30, constitués par une partie en saillie adaptée pour s'engager dans des moyens d'articulation complémentaires, constitués par un canon de pivotement, de l'une des ailes de la structure de support 10 et désignés par la référence générale 31.

Dans cet exemple de réalisation, les moyens d'immobilisation axiale temporaire et les moyens de limitation du déplacement axial de l'arbre dans le palier, sont formés par des premières et des secondes surfaces de butée prévues à une extrémité d'un organe 32 engagé dans un évidement 33 prévu dans la partie en saillie 30 d'articulation du palier de montage sur l'aile correspondante de la structure de support 10.

Cet organe 32 est monté déplaçable radialement par l'opérateur de montage, entre une première position dans laquelle les premières surfaces de butée, désignées de façon générale par la référence 34 sur cette figure 6, coopérent avec des moyens de butée complémentaire 35 de l'arbre constitués par exemple par une collerette fixée sur cet arbre, pour immobiliser celui-ci en position en vue du montage de l'ensemble sur véhicule et une seconde position, dans laquelle les secondes surfaces de butée désignées par la référence générale 36 sur cette figure, délimitent une plage de déplacement axial autorisé de ces moyens de butée complémentaires 35 de l'arbre et donc de l'arbre par rapport au palier.

Ces première et seconde positions de cet organe peuvent être délimitées par exemple par des languettes latérales élastiques 37 de cet organe, adaptées pour coopérer avec les bords d'une lumière 2c du corps, dans laquelle est engagé cet organe ou encore avec des parties en saillie du palier.

On notera que les premières et les secondes surfaces de butée de cet organe sont ménagées à l'une des extrémités de celui-ci, en saillie dans le corps à travers la lumière 2c de celui-ci, tandis qu'à son autre extrémité cet organe comporte des moyens de préhension 38 par un utilisateur pour assurer son déplacement, ces moyens faisant saillie au-delà de la structure de support 10.

On conçoit alors que dans cet exemple de réalisation, les moyens d'immobilisation axiale temporaire de l'arbre par rapport au palier et les moyens de limitation du déplacement axial de celui-ci, sont formés par des premières et des secondes surfaces de butée prévues à l'une des extrémités d'un organe 32 monté déplaçable radialement dans un évidement 33 des moyens d'articulation du palier sur l'une des ailes de la structure de support 10, entre une première position dans laquelle les premières surfaces de butée coopérent avec des moyens de butée complémentaires de l'arbre pour l'immobiliser en position et une seconde position dans laquelle les secondes surfaces de butée de cet organe délimitent une plage de déplacement axial autorisé des moyens de butée complémentaires de l'arbre et donc de l'arbre par rapport au palier.

L'ensemble de colonne de direction selon l'invention est très facile à monter sur véhicule et permet de garantir une fixation suffisamment fiable de l'arbre sur le reste du mécanisme de direction du véhicule, même lorsque les moyens d'immobilisation sont déplacés accidentellement vers leur position escamotée, au cours du montage.

## Revendications

1. Ensemble de colonne de direction réglable en position notamment pour véhicule automobile, du type comportant un arbre de direction (1) monté rotatif dans un corps de colonne (2) associé à l'une de ses extrémités à un palier de montage (3), comportant sur des faces latérales opposées des moyens d'articulation (4,5;30) adaptés pour coopérer avec des moyens complémentaires (6,7;31) d'ailes (8,9) d'une structure de support (10), pour la fixation du corps sur le reste du véhicule, et à l'autre de ses extrémités, à des moyens de blocage du corps (2) en position par rapport à la structure de support (10), déplaçables par un utilisateur entre une position de verrouillage et une position de déverrouillage permettant le réglage de la position du volant, caractérisé en ce qu'il comporte des moyens (11;32) d'immobilisation axiale temporaire de l'arbre (1) par rapport au palier (3), déplaçables entre une position active d'immobilisation et une position escamotée et des moyens (20;32) de limitation du déplacement axial de l'arbre (1) par rapport au palier (3) lorsque les moyens (11;32) d'immobilisation axiale temporaire sont en position escamotée.

2. Dispositif selon la revendication 1, caractérisé en ce que les moyens d'immobilisation axiale temporaire et les moyens de limitation du déplacement axial sont formés par des premières (34) et des secondes (36) surfaces de butée prévues à une extrémité d'un organe (32) engagé dans un évidement (33) du palier (3) et déplaçable radialement entre une première position dans laquelle les premières surfaces de butée (34) coopèrent avec des moyens (35) de butée complémentaires de l'arbre (1) pour immobiliser celui-ci en position axiale dans le palier (3) et une seconde position dans laquelle les secondes surfaces de butée (36) délimitent une plage de déplacement axial des moyens (35) de butée complémentaires de l'arbre et donc de l'arbre par rapport au palier (3).

3. Dispositif selon la revendication 2, caractérisé en ce que l'évidement (33) de réception de l'organe (32) est ménagé dans les moyens d'articulation (30) du palier (3) sur l'une des ailes de la structure de support (10).

4. Dispositif selon la revendication 2 ou 3, caractérisé en ce que l'autre extrémité de l'organe (32) comporte des moyens de préhension (38) pour son déplacement par un utilisateur.

5. Dispositif selon la revendication 1, caractérisé en ce que les moyens d'immobilisation axiale temporaire comportent des premières surfaces de butée (13) prévues à une extrémité d'un premier organe (11) disposé dans un premier évidement (12) du palier (3) et déplaçable radialement entre une position active, dans laquelle les premières surfaces de butée (13) coopèrent avec des moyens de butée complémentaires (14) de l'arbre (1) pour l'immobiliser en position et une position escamotée et en ce que les moyens de limitation du déplacement axial comportent des secondes surfaces de butée (22) prévues à l'extrémité d'un second organe (20) disposé dans un second évidement (21) du palier (3), et délimitant une plage de déplacement axial des moyens de butée complémentaires (14) de l'arbre (1) et donc de l'arbre par rapport au palier (3).

6. Dispositif selon la revendication 5, caractérisé en ce que l'un (21) des évidements est ménagé dans les moyens d'articulation (5) du palier (3) sur l'une (9) des ailes de la structure de support (10) tandis que l'autre évidement (12) est ménagé dans la partie inférieure du palier (3).

7. Dispositif selon la revendication 5 ou 6, caractérisé en ce que l'autre extrémité du premier organe (11) comporte des moyens de préhension (16), pour son déplacement par l'utilisateur.

## Claims

1. Position-adjustable steering column assembly especially for motor vehicles, of the type comprising a steering shaft (1) mounted so that it can rotate in a column body (2) associated at one of its ends with a mounting bearing (3) comprising, on opposed lateral faces, articulation means (4, 5; 30) adapted to interact with complementary means (6, 7; 31) of arms (8, 9) of a support structure (10) for attaching the body to the rest of the vehicle, and at the other of its ends, with means of locking the body (2) in position with respect to the support structure (10), which means can be shifted by a user between a locked position and an unlocked position allowing the position of the steering wheel to be adjusted, characterized in that it comprises means (11; 32) of temporarily axially immobilizing the shaft (1) with respect to the bearing (3), which means can be shifted between an active immobilizing position and a retracted position, and means (20; 32) for limiting the axial movement of the shaft (1) with respect to the bearing (3) when the temporary axial immobilization means (11; 32) are in the retracted position.

2. Device according to Claim 1, characterized in that the temporary axial immobilization means and the means of limiting the axial movement are formed by first stop surfaces (34) and second stop surfaces (36) provided at one end of a member (32) engaged in a recess (33) of the bearing (3) and which can be shifted radially between a first position in which the first stop surfaces (34) interact with complementary stop means (35) on the shaft (1) in order to immobilize the latter in terms of axial position in the bearing (3), and a second position in which the second stop surfaces (36) delimit a range for axial movement of the complementary stop means (35) of the shaft and therefore of the shaft with respect to the bearing (3).

3. Device according to Claim 2, characterized in that the recess (33) that accommodates the member (32) is formed in the means (30) that articulate the bearing (3) to one of the arms of the support structure (10).

4. Device according to Claim 2 or 3, characterized in that the other end of the member (32) comprises means (38) for grasping, so that it can be shifted by a user.

5. Device according to Claim 1, characterized in that the temporary axial immobilization means comprise first stop surfaces (13) provided at one end of a first member (11) arranged in a first recess (12) of the bearing (3) and which can be shifted radially between an active position, in which the first stop surfaces (13) interact with complementary stop means (14) of the shaft (1) in order to immobilize it in position and a retracted position and in that the means of limiting the axial movement comprise second stop surfaces (22) provided at the end of a second member (20) arranged in a second recess (21) of the bearing (3) and delimiting a range of axial movement of the complementary stop means (14) of the shaft (1) and therefore of the shaft with respect to the bearing (3).

6. Device according to Claim 5, characterized in that one (21) of the recesses is formed in the means (5) that articulate the bearing (3) to one (9) of the arms of the support structure (10) while the other recess (12) is formed in the lower part of the bearing (3).

7. Device according to Claim 5 or 6, characterized in that the other end of the first member (11) comprises means (16) for grasping so that it can be shifted by the user.

## Patentansprüche

1. Verstellbare Lenksäuleneinheit insbesondere für ein Kraftfahrzeug, die eine Lenkwelle (1) aufweist, die in einem Säulenkörper (2) drehbar montiert ist, dem an einem seiner Enden ein Montagelager (3) zugeordnet ist, das auf entgegengesetzten Seitenflächen Anlenkungseinrichtungen (4, 5; 30) aufweist, die dazu ausgebildet sind, mit ergänzenden Einrichtungen (6, 7; 31) von Schenkeln (8, 9) einer Tragstruktur (10) für die Befestigung des Körpers am restlichen Fahrzeug zusammenzuwirken, und dem am anderen seiner Enden Einrichtungen zur Blockierung des Körpers (2) in seiner Stellung bezüglich der Tragstruktur (10) zugeordnet sind, die durch einen Benutzer zwischen einer Verriegelungsstellung und einer Entriegelungsstellung bewegbar sind, die die Verstellung des Lenkrads gestattet, dadurch gekennzeichnet, daß sie Einrichtungen (11; 32) zur vorübergehenden axialen Festlegung der Welle (1) bezüglich des Lagers (3) aufweist, die zwischen einer aktiven Festlegungsstellung und einer ausgerückten Stellung beweglich sind, sowie Einrichtungen (20; 32) zur Begrenzung der axialen Bewegung der Welle (1) bezüglich des Lagers (3), wenn die Einrichtungen (11; 32) zur Vorübergehenden axialen Festlegung in ausgerückter Stellung sind.

2. Vorrichtung nach Anspruch 1, dadurch gekennzeichnet, daß die Einrichtungen zur vorübergehenden axialen Festlegung und die Einrichtungen zur Begrenzung der axialen Bewegung von ersten (34) und zweiten (36) Anschlagsflächen gebildet sind, die an einem Ende eines Organs (32) vorgesehen sind, das in eine Aussparung (33) des Lagers (3) eingesetzt ist und radial zwischen einer ersten Stellung, in der die ersten Anschlagsflächen (34) mit ergänzenden Anschlagseinrichtungen (35) der Welle (1) zusammenwirken, um diese in ihrer axialen Stellung im Lager (3) festzulegen, und einer zweiten Stellung beweglich ist, in der die zweiten Anschlagsflächen (36) einen axialen Bewegungsbereich der ergänzenden Anschlagseinrichtungen (35) der Welle und damit der Welle bezüglich des Lagers (3) abgrenzen.

3. Vorrichtung nach Anspruch 2, dadurch gekennzeichnet, daß die Aussparung (33) zur Aufnahme des Organs (32) in den Einrichtungen (30) zur Anlenkung des Lagers (3) an einem der Schenkel der Tragstruktur (10) vorgesehen ist.

4. Vorrichtung nach Anspruch 2 oder 3, dadurch gekennzeichnet, daß das andere Ende des Organs (32) Greifeinrichtungen (38) für seine Bewegung durch einen Benutzer aufweist.

5. Vorrichtung nach Anspruch 1, dadurch gekennzeichnet, daß die Einrichtungen zur Vorübergehenden axialen Festlegung erste Anschlagaflächen (13) aufweisen, die an einem Ende eines ersten Organs (11) vorgesehen sind, das in einer ersten Aussparung (12) des Lagers (3) angeordnet ist und radial zwischen einer aktiven Stellung, in der die ersten Anachlagsflächen (13) mit ergänzenden Anschlagseinrichtungen (14) der Welle (1) zusammenwirken, um sie in ihrer Stellung festzulegen, und einer ausgerückten Stellung beweglich ist, und daß die Einrichtungen zur Begrenzung der axialer Bewegung zweite Anschlagsflächen (22) aufweisen, die am Ende eines zweiten Organs (20) vorgesehen sind, das in einer zweiten Aussparung (21) des Lagers (3) angeordnet ist, und die einen axialen Bewegungsbereich der ergänzenden Anschlagseinrichtungen (14) der Welle (1) und damit der Welle bezüglich des Lagers (3) abgrenzen.

6. Vorrichtung nach Anspruch 5, dadurch gekennzeichnet, daß eine (21) der Aussparungen in den Einrichtungen (5) zur Anlenkung des Lagers (3) an einem (9) der Schenkel der Tragstruktur (10) vorgesehen ist, während die andere Aussparung (12) im unteren Teil des Lagers (3) vorgesehen ist.

7. Vorrichtung nach Anspruch 5 oder 6, dadurch gekennzeichnet, daß das andere Ende des ersten Organs (11) Greifeinrichtungen (16) für seine Bewegung durch den Benutzer aufweist.
